# FASCICULE DE BREVET EUROPEEN

(11) **EP 2 620 635 B1**
(45) Date de publication et mention de la délivrance du brevet: **29.07.2015**
(21) Numéro de dépôt: 13152565.1
(22) Date de dépôt: 24.01.2013
(51) Int. Cl.: F03B 17/06, F03B 3/12, F03B 13/26

(54) **Pale pour rotor d'hydrolienne, rotor d'hydrolienne comprenant une telle pale, hydrolienne associée et procédé de fabrication d'une telle pale**
Schaufelblatt für Rotor eines Strömungskraftwerks, Rotor eines Strömungskraftwerks, der ein solches Schaufelblatt umfasst, entsprechendes Strömungskraftwerk und Herstellungsverfahren eines solchen Schaufelblatts
Blade for a rotor of a marine turbine, rotor of a marine turbine including such a blade, associated marine turbine and method for manufacturing such a blade

(30) Priorité: 27.01.2012 FR 1250809
(43) Date de publication de la demande: 31.07.2013
(73) Titulaire: GE Energy Power Conversion Technology Ltd, Rugby Warwickshire CV21 1BU (GB)
(72) Inventeur: Duchene, Hugo, 54000 Nancy (FR); Cagnin, Philippe, 54250 Champigneulles (FR); Girard-Pecarrere, Antoine, 17000 La Rochelle (FR)
(74) Mandataire: Serjeants LLP

(56) Documents cités:
- JP-A- 2008 180 130
- US-A- 1 833 529
- US-A- 2 357 628

## Description

La présente invention concerne une pale pour rotor d'hydrolienne, la pâle s'étendant selon une direction radiale et comportant un extrados, un intrados, un bord d'attaque et un bord de fuite, le bord d'attaque étant le bord de la pale s'étendant sensiblement selon la direction radiale et disposé en amont suivant le sens de l'écoulement de l'eau le long de la pâle, le bord de fuite étant le bord de la pale opposé au bord d'attaque et disposé en aval suivant le sens de l'écoulement de l'eau le long de la pale, au moins une portion de la pale présentant, en section transversale selon un plan de coupe, un profil comportant une partie épaisse et une partie fine, le plan de coupe étant perpendiculaire à la direction radiale, la partie épaisse et la partie fine ayant chacune une épaisseur maximale selon une direction perpendiculaire à l'extrados, l'épaisseur maximale de la partie épaisse étant au moins quatre fois supérieure à l'épaisseur maximale de la partie fine.

L'invention concerne également un rotor d'hydrolienne, le rotor comprend un anneau intérieur, un anneau extérieur et au moins une telle pâle s'étendant selon une direction radiale entre l'anneau intérieur et l'anneau extérieur.

L'invention concerne également une hydrolienne comprenant un stator et un tel rotor.

L'invention concerne également un procédé de fabrication d'une telle pâle de rotor d'hydrolienne.

On connaît une pale pour rotor d'hydrolienne du type précité (voir, par exemple, US 2,357,628). Les pales connues présentent généralement deux types de profil. Suivant un premier type, le profil comporte essentiellement la partie épaisse et la longueur curviligne de la partie fine est alors voisine de zéro. Suivant un deuxième type, le profil comporte essentiellement la partie fine et la longueur curviligne de la partie fine est alors supérieure à la longueur de la corde entre le bord d'attaque et le bord de fuite.

Toutefois, une hydrolienne équipée du premier type de pale avec le profil comportant essentiellement la partie épaisse présente un bon rendement pour des vitesses de rotation du rotor relativement faibles. Une hydrolienne équipée du deuxième type de pale avec le profil comportant essentiellement la partie fine présente un bon rendement pour des vitesses de rotation du rotor relativement élevées, supérieures à celles associées au premier type de pâle.

Le but de l'invention est donc de proposer une pale pour rotor d'hydrolienne offrant un rendement élevé sur une plus grande plage de vitesses de rotation du rotor d'hydrolienne, pour des vitesses à la fois faibles et élevées, telles que des vitesses comprises entre 20 et 40 tours par minute.

A cet effet, l'invention a pour objet une pale du type précité, **caractérisée en ce que :**
la longueur curviligne de la partie fine est comprise entre 0,1 fois la longueur de la corde entre le bord d'attaque et le bord de fuite et 0,9 fois la longueur de ladite corde, de préférence comprise entre 0,25 fois la longueur de ladite corde et 0,9 fois la longueur de ladite corde ; et
le profil présente, du côté de l'intrados, un point d'inflexion et le point d'inflexion correspond sensiblement à la délimitation entre la partie épaisse et la partie fine.

Suivant d'autres aspects avantageux de l'invention, la pale comprend une ou plusieurs des caractéristiques suivantes, prises isolément ou suivant toutes les combinaisons techniquement possibles :
- l'épaisseur maximale de la partie épaisse est inférieure ou égale à 0,25 fois la longueur de la corde entre le bord d'attaque et le bord de fuite,
- toute la pale présente la partie épaisse et la partie fine quelle que soit la position selon la direction radiale du plan de coupe,
- la pale présente le même profil quelle que soit la position selon la direction radiale du plan de coupe,
- la longueur de la corde entre le bord d'attaque et le bord de fuite est de valeur variable en fonction de la position selon la direction radiale du plan de coupe, de préférence de valeur décroissante depuis l'anneau intérieur vers l'anneau extérieur, et
- la partie épaisse présente un plan de symétrie, le plan de symétrie étant parallèle à la direction radiale.

L'invention a également pour objet un rotor d'hydrolienne, le rotor comprenant un anneau intérieur, un anneau extérieur et au moins une pale s'étendant selon une direction radiale entre l'anneau intérieur et l'anneau extérieur, **caractérisé en ce que** la pale est telle que définie ci-dessus.

L'invention a également pour objet une hydrolienne comprenant un rotor et un stator, **caractérisée en ce que** le rotor est tel que défini ci-dessus.

L'invention a également pour objet un procédé de fabrication d'une pale de rotor d'hydrolienne, la pale s'étendant selon une direction radiale et comportant un extrados, un intrados, un bord d'attaque et un bord de fuite, le bord d'attaque étant le bord de la pale s'étendant sensiblement selon la direction radiale et disposé en amont suivant le sens de l'écoulement de l'eau le long de la pale, le bord de fuite étant le bord de la pale opposé au bord d'attaque et disposé en aval suivant le sens de l'écoulement de l'eau le long de la pale,
le procédé de fabrication comprenant les étapes suivantes :
- le calcul, pour chaque point du bord d'attaque, d'un profil de la pâle, en section transversale selon un plan de coupe passant par le point du bord d'attaque et perpendiculaire à la direction radiale,
- la fabrication de la pale suivant les profils calculés,
le procédé de fabrication étant **caractérisé en ce que** l'étape de calcul comporte :
- le choix d'un premier point intermédiaire le long d'une courbe d'extrados prédéterminée, le premier point intermédiaire étant distinct de première et seconde extrémités de la courbe d'extrados,
- la détermination d'une première portion de courbe d'intrados, via une opération de symétrie, par rapport à une droite passant par le premier point intermédiaire et une première extrémité de la courbe d'extrados, de la portion de la courbe d'extrados comprise entre la première extrémité et le premier point intermédiaire,
- la suppression d'un tronçon de la première portion de courbe d'intrados compris entre le premier point intermédiaire et un deuxième point intermédiaire agencé le long de la première portion pour d'obtenir une première portion raccourcie, et
- la détermination d'une deuxième portion de courbe d'intrados en reliant le deuxième point intermédiaire à la seconde extrémité via une ligne géométrique,
la première portion raccourcie et la deuxième portion formant une courbe d'intrados, et le profil étant formé de la courbe d'extrados et de la courbe d'intrados.

Suivant un autre aspect avantageux de l'invention, le procédé de fabrication comprend la caractéristique suivante :
- l'étape de détermination de la deuxième portion comporte une translation non uniforme de la portion de la courbe d'extrados comprise entre la seconde extrémité et le premier point intermédiaire, la distance de translation étant variable d'un point à l'autre de la portion, de préférence croissante depuis le point à translater correspondant à la seconde extrémité jusqu'au point à translater correspondant au premier point intermédiaire.

Ces caractéristiques et avantages de l'invention apparaitront à la lecture de la description qui va suivre, donnée uniquement à titre d'exemple non limitatif, et faite en référence aux dessins annexés sur lesquels :
- la figure 1 est une vue en perspective d'une hydrolienne selon l'invention,
- la figure 2 est une vue schématique d'une pale de l'hydrolienne de la figure 1, selon un premier mode de réalisation de l'invention,
- la figure 3 est une vue en coupe selon le plan III de la figure 2,
- la figure 4 est un organigramme d'un procédé de fabrication de la pale de la figure 2,
- les figures 5 à 9 sont des représentations schématiques d'un profil de la pale au cours d'étapes du procédé de fabrication visant à déterminer le profil de la pale, et
- la figure 10 est une vue analogue à celle de la figure 2 selon un deuxième mode de réalisation de l'invention.

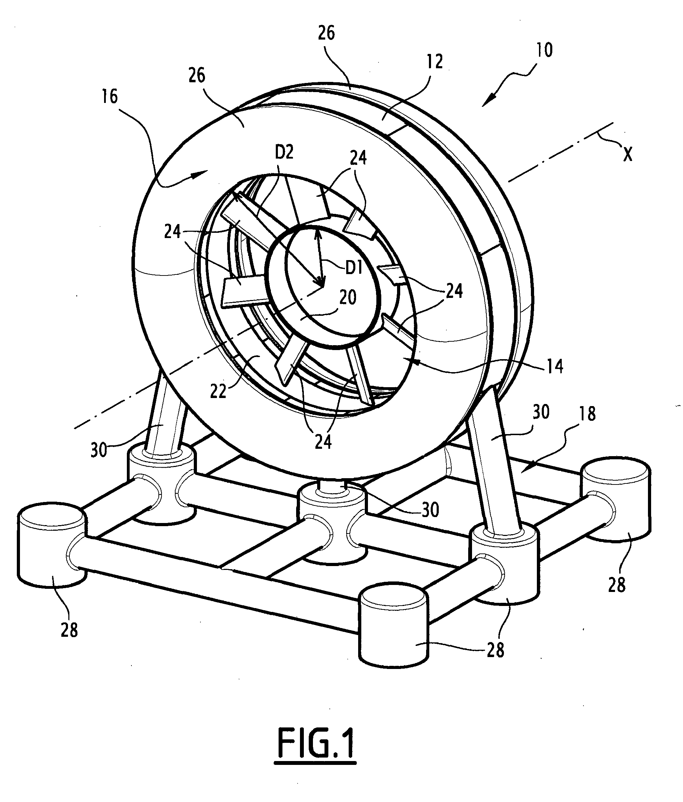

Sur la figure 1, une hydrolienne 10 comprend un stator 12, un rotor 14 mobile en rotation autour d'un axe longitudinal X, et une tuyère 16. L'hydrolienne 10 comprend également un support 18 de maintien du stator.

L'hydrolienne 10 est propre à transformer l'énergie cinétique d'un courant d'un liquide circulant à l'intérieur de la tuyère 16 selon la direction longitudinale X en énergie électrique, le courant entraînant le rotor 14 en rotation autour de l'axe X, et la rotation du rotor 14 par rapport au stator 12 générant une énergie électrique.

L'hydrolienne 10 est, par exemple, une hydrolienne sous-marine destinée à utiliser l'énergie cinétique des courants marins. En variante, l'hydrolienne est destinée à être immergée dans un cours d'eau, afin de convertir l'énergie hydraulique du cours d'eau en énergie électrique.

Le stator 12 est en forme d'un anneau de révolution autour de l'axe longitudinal X. Le stator 12 comporte, comme connu en soi, des parties magnétiques actives statoriques, non représentées.

Le rotor 14 comprend un anneau intérieur 20, un anneau extérieur 22 et une pluralité de pales 24 s'étendant selon une direction radiale R, perpendiculaire à l'axe longitudinal X, entre l'anneau intérieur 20 et l'anneau extérieur 22. Le nombre N de pales 24 est de préférence compris entre 2 et 20.

Dans l'exemple de réalisation de la figure 1, le rotor 14 comporte huit pales réparties angulairement sur la périphérie extérieure de l'anneau intérieur 20, et N est égal à 8. Autrement dit, l'écart angulaire entre deux pales successives est sensiblement égal à 45°.

Le rotor 14 comprend également des parties magnétiques actives rotoriques, non représentées, agencées sur la périphérie extérieure de l'anneau extérieur 22 et propres à coopérer avec les parties magnétiques actives statoriques, afin de générer une énergie électrique lors de la rotation du rotor 14 autour de l'axe X, à l'intérieur du stator 12.

La tuyère 16 comporte deux demi-tuyères 26 fixées de part et d'autre du stator 12 selon la direction longitudinale X. La tuyère 16 est en forme d'un tore de révolution autour de l'axe longitudinal X, le tore présentant une section transversale de forme oblongue. Chaque demi-tuyère 26 présente, en section suivant un plan longitudinal parallèle à l'axe X, une forme de U, les deux extrémités du U étant fixées au stator 12.

Le support de maintien 18 comporte une pluralité de plots 28 d'appui sur le sol et trois bras verticaux 30 de maintien du stator à l'écart du sol. Le support de maintien 18 comporte, par exemple, un châssis tubulaire.

L'anneau intérieur 20 et l'anneau extérieur 22 sont chacun en forme d'un tube cylindrique de révolution autour de l'axe longitudinal X. La longueur de l'anneau intérieur 20 et la longueur de l'anneau extérieur 22 selon la direction longitudinale X sont, par exemple, sensiblement égales. En variante, la longueur de l'anneau intérieur 20 et la longueur de l'anneau extérieur 22 selon la direction longitudinale X sont différentes.

L'anneau intérieur 20 présente un premier diamètre D1 dans le plan perpendiculaire à l'axe X, et l'anneau extérieur 22 présente un deuxième diamètre D2 de valeur supérieure à celle du premier diamètre D1. La valeur du premier diamètre D1 est, par exemple, comprise entre 2 000 mm et 8 000 mm. La valeur du deuxième diamètre D2 est, par exemple, comprise entre 4 000 mm et 18 000 mm.

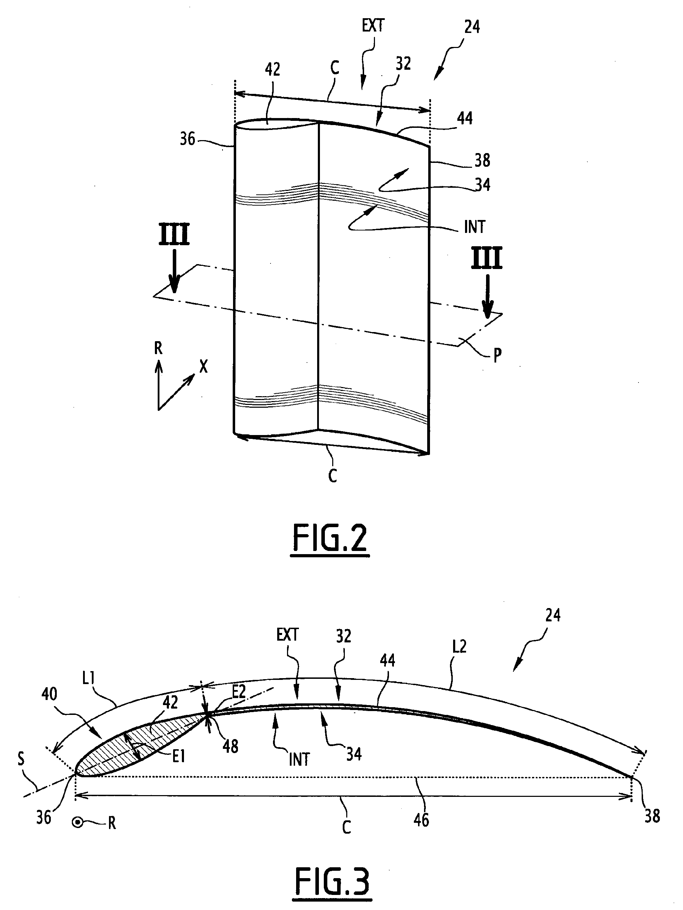

Chaque pale 24 comporte une première face 32, une deuxième face 34, un bord d'attaque 36 et un bord de fuite 38, comme représenté sur la figure 2. Suivant un premier sens du courant d'eau le long de la direction longitudinale X, la première face 32 correspond à l'extrados EXT et la deuxième face 34 correspond à l'intrados INT, l'intrados INT étant la face de la pale 24 soumise à la pression du courant d'eau et l'extrados EXT étant la face de la pale 24 du côté opposé à l'intrados INT. Suivant un second sens du courant, opposé au premier sens, la première face 32 correspond à l'intrados INT et la deuxième face 34 correspond à l'extrados EXT. Le bord d'attaque 36 est le bord de la pale 24 s'étendant selon la direction radiale R et disposé en amont suivant le sens de l'écoulement de l'eau le long de la pale 24. Le bord de fuite 38 est le bord de la pale 24 opposé au bord d'attaque 36 et disposé en aval suivant le sens de l'écoulement de l'eau. Autrement dit, le bord d'attaque 36 fait face au flux d'eau, et le bord de fuite 38 correspond à la partie arrière de la pale 24 suivant le sens de l'écoulement de l'eau.

Au moins une portion de la pale 24 selon la direction radiale R présente, en section transversale selon un plan de coupe P perpendiculaire à la direction radiale R, un profil 40 comportant une partie épaisse 42 et une partie fine 44.

Le bord d'attaque 36 et le bord de fuite 38 sont reliés par un segment fictif 46, représenté en traits pointillés sur la figure 3, également appelé corde entre le bord d'attaque 36 et le bord de fuite 38.

Le profil 40 présente, du côté de l'intrados INT, un point d'inflexion 48.

La partie épaisse 42 a une première épaisseur maximale E1 selon une direction perpendiculaire à l'extrados EXT, et présente une première longueur curviligne L1 du côté de l'extrados EXT, comme représenté sur la figure 3.

La partie épaisse 42 présente un plan de symétrie S, visible sur la figure 3, le plan de symétrie S étant parallèle à la direction radiale R. La partie épaisse 42 est, par exemple, réalisée en un matériau métallique, tel que de l'aluminium.

La partie fine 44 a une deuxième épaisseur maximale E2 selon une direction perpendiculaire à l'extrados EXT, et présente une deuxième longueur curviligne L2 du côté de l'extrados EXT. La partie fine 44 est, par exemple, réalisée en un matériau composite, ou en tôle, ou encore en polyétheréthercétone, également appelé PEEK (de l'anglais *PolyEtherEtherKetone*).

En variante, la partie épaisse 42 et la partie fine 44 sont réalisées en un matériau thermoplastique ou thermodurcissable. En variante encore, la partie épaisse 42 est réalisée en un matériau composite.

La corde 46 entre le bord d'attaque et le bord de fuite présente une longueur C.

Le point d'inflexion 48 correspond sensiblement à la délimitation entre la partie épaisse 42 et la partie fine 44.

La deuxième longueur curviligne L2 est comprise entre 0,1 fois la longueur C de la corde 46 entre le bord d'attaque et le bord de fuite et 0,9 fois la longueur C de ladite corde 46. La deuxième longueur curviligne L2 est de préférence comprise entre 0,25 fois la longueur C et 0,9 fois la longueur C.

La première épaisseur maximale E1 est au moins quatre fois supérieure à la deuxième épaisseur maximale E2. La première épaisseur maximale E1 est inférieure ou égale à 0,25 fois la longueur C de la corde entre le bord d'attaque 36 et le bord de fuite 38.

Dans l'exemple de réalisation de la figure 2, toute la pale 24 présente la partie épaisse 42 et la partie fine 44 quelle que soit la position du plan de coupe P selon la direction radiale R. La pale 24 présente, par exemple, le même profil 40 quelle que soit la position du plan de coupe P selon la direction radiale R.

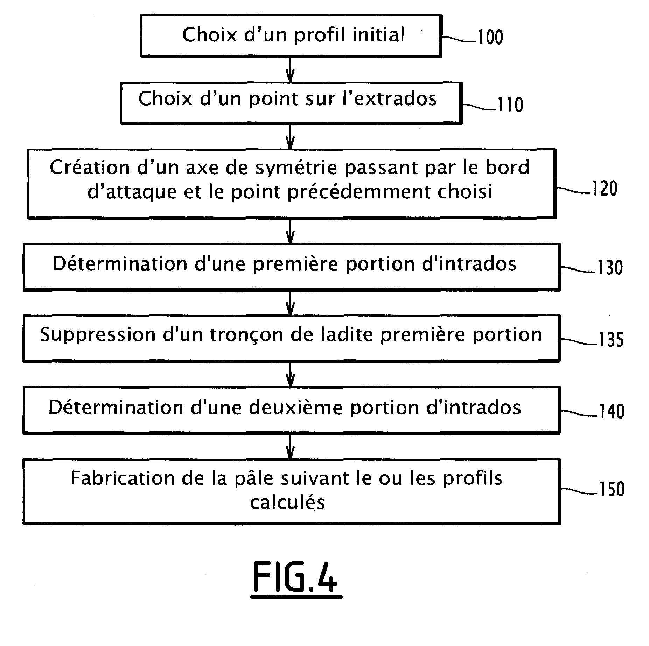

Le procédé de fabrication de la pale 24 selon l'invention va être à présent décrit à l'aide de la figure 4.

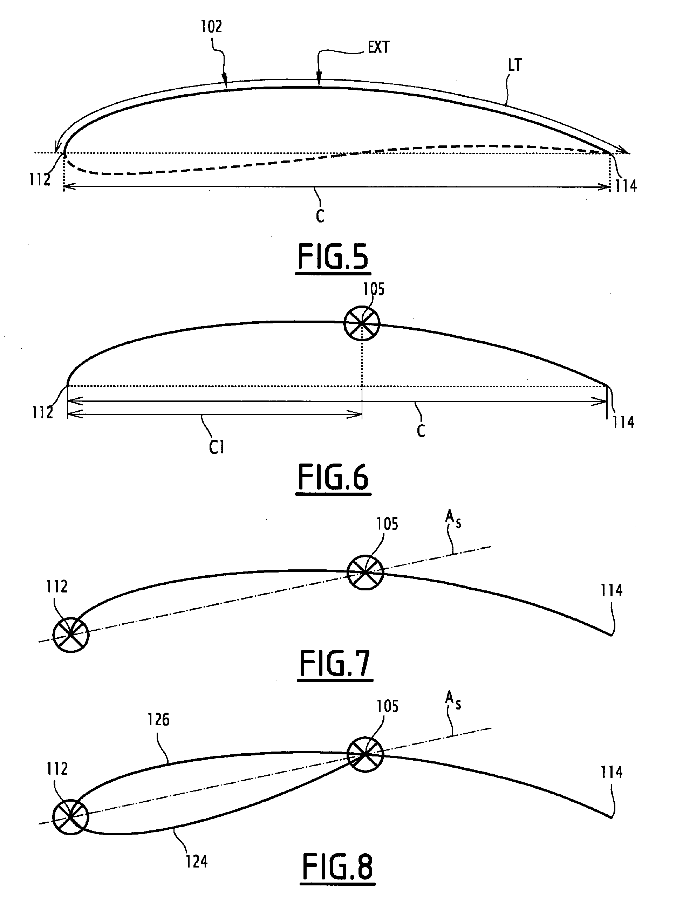

Lors de l'étape initiale 100, on choisit un profil prédéterminé de référence. De ce profil de référence est conservée une courbe d'extrados 102, représentée en trait continu sur la figure 5. Le profil choisi présente une longueur curviligne totale LT du côté de l'extrados EXT.

Un premier point intermédiaire 105 est alors choisi, lors de l'étape suivante 110, le long de la courbe d'extrados prédéterminée 102, le premier point intermédiaire 105 étant distinct de première 112 et seconde 114 extrémités de la courbe d'extrados 102 (figure 6). Un segment fictif entre, d'une part, la première extrémité 112, et d'autre part, la projection orthogonale du point de référence 105 sur la corde entre les première et seconde extrémités 112, 114 présente une longueur C1, correspondant à un pourcentage de la longueur C de la corde. La valeur de la longueur C1 est sensiblement comprise entre 10% et 90% de la valeur de la longueur C, de préférence sensiblement comprise entre 10% et 75% de la valeur de la longueur C.

Un axe de symétrie A_{S} passant par la première extrémité 112 de la courbe d'extrados et le premier point intermédiaire 105 précédemment choisi est alors créé lors de l'étape 120, comme représenté sur la figure 7.

Une première portion 124 de courbe d'intrados est déterminée, lors de l'étape 130, via une opération de symétrie, par rapport à l'axe de symétrie A_{S}, de la portion 126 de la courbe d'extrados comprise entre la première extrémité 112 et le premier point intermédiaire 105, comme représenté sur la figure 8.

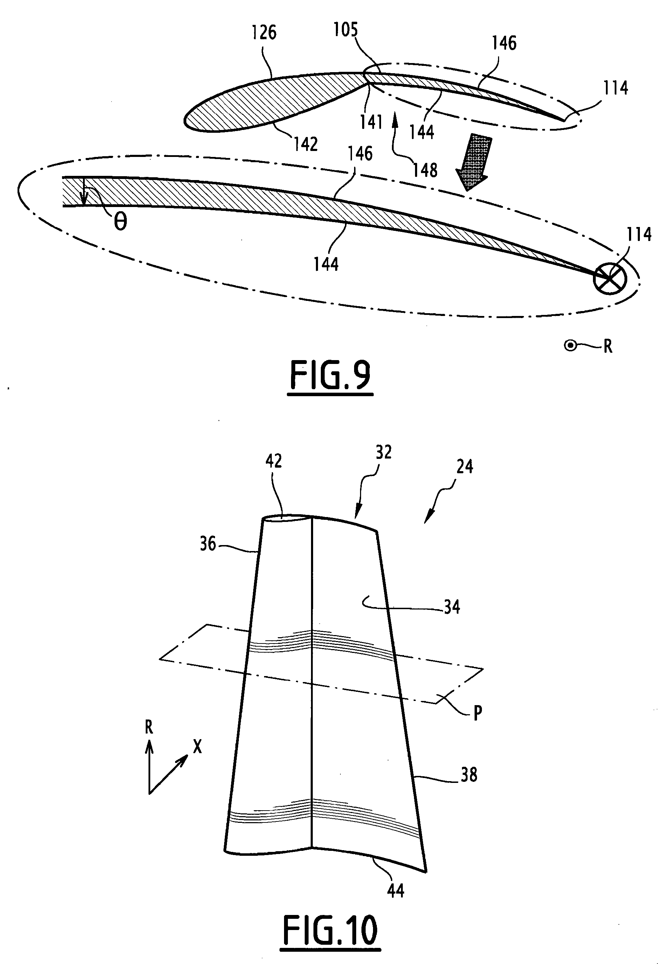

Le procédé de fabrication comporte ensuite, lors de l'étape 135, la suppression d'un tronçon de la première portion 124 de courbe d'intrados compris entre le premier point intermédiaire 105 et un deuxième point intermédiaire 141 agencé le long de la première portion 124, afin d'obtenir une première portion raccourcie 142 de courbe d'intrados, visible sur la figure 9. Le deuxième point intermédiaire 141 forme une des deux extrémités de la première portion raccourcie 142, l'autre extrémité de la première portion raccourcie 142 étant la première extrémité 112.

Une deuxième portion 144 de courbe d'intrados est alors déterminée, lors de l'étape 140, en reliant le deuxième point intermédiaire 141 à la seconde extrémité 114 via une ligne géométrique.

Dans l'exemple de réalisation de la figure 9, la deuxième portion 144 de courbe d'intrados est déterminée via une opération de rotation, d'un angle prédéterminé θ autour de la seconde extrémité 114, de la portion 146 de la courbe d'extrados 102 comprise entre la seconde extrémité 114 et le premier point intermédiaire 105. La deuxième portion 144 de courbe d'intrados est ensuite prolongée jusqu'au deuxième point intermédiaire 141.

En variante non représentée, la deuxième portion 144 de courbe d'intrados est déterminée via une opération de translation de la portion 146 de la courbe d'extrados 102 comprise entre la seconde extrémité 114 et le premier point intermédiaire 105. La translation est, par exemple, une translation d'une distance prédéterminée et suivant une direction perpendiculaire à la portion 146, en un point de la portion 146. En variante, la translation est une translation non uniforme, la distance de translation étant variable d'un point à l'autre de la portion 146, de préférence croissante depuis le point à translater correspondant à la seconde extrémité 114 jusqu'au point à translater correspondant au premier point intermédiaire 105.

En variante encore, la deuxième portion 144 de courbe d'intrados est sensiblement en forme d'une ligne droite entre le deuxième point intermédiaire 141 et la seconde extrémité 114.

Une courbe d'intrados 148, visible sur la figure 9, est formée de la première portion raccourcie 142 et de la deuxième portion 144. Le profil calculé est alors formé de la courbe d'extrados 102 et de la courbe d'intrados 148.

La pale 24 est enfin fabriquée lors de l'étape 150 suivant le profil calculé lors des étapes précédentes 100 à 140, la pale présentant le même profil 40 quelle que la position du plan de coupe P selon la direction radiale R dans l'exemple de réalisation de la figure 2.

Le fonctionnement de l'hydrolienne 10 selon l'invention va être à présent décrit.

Lorsqu'un courant d'eau circule à travers la tuyère 16 selon la direction longitudinale X, celui-ci exerce une pression sur les différentes pales 24 du rotor, ce qui entraîne le rotor 14 en rotation autour de l'axe longitudinal X. Les parties magnétiques actives rotoriques sont alors mobiles par rapport aux parties magnétiques actives statoriques, ce qui engendre un champ magnétique et induit un courant électrique dans le stator 12. L'énergie électrique, ainsi générée par l'hydrolienne 10 à partir de l'énergie hydraulique du courant, est ensuite véhiculée vers un réseau électrique.

L'hydrolienne 10 équipée de la pale 24 selon l'invention permet de délivrer une puissance électrique supérieure à 100 kW pour des vitesses de rotation du rotor 14 par exemple comprises entre 20 et 40 tours par minute. En comparaison, les pales de l'état de la technique délivrent une puissance électrique comparable seulement pour une plage plus réduite de vitesses de rotation du rotor, telles que des vitesses comprises entre 25 et 35 tours par minute.

La pale 24 selon l'invention offre ainsi un rendement plus élevé et permet d'augmenter la puissance électrique délivrée par l'hydrolienne 10 pour une large plage de vitesses de rotation du rotor 14, telles que des vitesses comprises entre 20 et 40 tours par minute.

La pale 24 selon l'invention offre également un bon compromis entre rigidité de par sa partie épaisse 42 et souplesse de par sa partie fine 44.

Le rendement de la pale 24 selon l'invention est, en outre, optimal quel que soit le sens du courant d'eau selon la direction longitudinale X, grâce à la souplesse de la partie fine 44 qui, en se déformant, s'adapte au sens du courant d'eau, permettant ainsi à la pale 24 de présenter un profil dont l'extrados EXT est optimal.

La figure 10 illustre un deuxième mode de réalisation de l'invention pour lequel les éléments analogues au premier mode de réalisation, décrits précédemment, sont repérés par des références identiques, et ne sont pas décrits à nouveau.

Selon le deuxième mode de réalisation, la longueur C de la corde 46 entre le bord d'attaque 36 et le bord de fuite 38 est de valeur variable en fonction de la position selon la direction radiale R du plan de coupe P. Autrement dit, le profil 40 est de forme variable en fonction de la position du plan de coupe P selon la direction radiale R.

La longueur C est, de préférence, de valeur décroissante depuis l'anneau intérieur 20 vers l'anneau extérieur 22.

Le procédé de fabrication de la pale 24 est analogue à celui décrit pour le premier mode de réalisation en regard de la figure 4, et les étapes 100 à 140 sont en outre réitérées afin de calculer l'ensemble des profils 40 suivant les différents plans de coupe P. La pâle pale 24 est ensuite fabriquée lors de l'étape 150 en fonction des différents profils calculés.

Le fonctionnement de ce deuxième mode de réalisation est identique à celui du premier mode de réalisation, et n'est pas décrit à nouveau.

Les avantages de ce deuxième mode de réalisation comprennent ceux du premier mode de réalisation. Les pales 24 avec un profil de longueur de corde C variable permettent en outre d'uniformiser les contraintes mécaniques dans la pale 24 suivant la direction radiale R.

On conçoit ainsi que la pâle 24 selon l'invention offre un rendement plus élevé et permettant d'augmenter la puissance électrique délivrée par l'hydrolienne 10 selon l'invention pour une large plage de vitesses de rotation du rotor 14, telles que des vitesses comprises entre 20 et 40 tours par minute, et quel que soit le sens du courant.

## Revendications

1. Pale (24) pour rotor (14) d'hydrolienne (10), la pale (24) s'étendant selon une direction radiale (R) et comportant un extrados (EXT), un intrados (INT), un bord d'attaque (36) et un bord de fuite (38), le bord d'attaque (36) étant le bord de la pale (24) s'étendant sensiblement selon la direction radiale (R) et disposé en amont suivant le sens de l'écoulement de l'eau le long de la pale (24), le bord de fuite (38) étant le bord de la pale (24) opposé au bord d'attaque (36) et disposé en aval suivant le sens de l'écoulement de l'eau le long de la pale (24),
au moins une portion de la pale (24) présentant, en section transversale selon un plan de coupe (P), un profil (40) comportant une partie épaisse (42) et une partie fine (44), le plan de coupe (P) étant perpendiculaire à la direction radiale (R), la partie épaisse (42) et la partie fine (44) ayant chacune une épaisseur maximale (E1, E2) selon une direction perpendiculaire à l'extrados (EXT), l'épaisseur maximale (E1) de la partie épaisse (42) étant au moins quatre fois supérieure à l'épaisseur maximale (E2) de la partie fine (44),
**caractérisée en ce que** :
la longueur curviligne (L2) de la partie fine (44) est comprise entre 0,1 fois la longueur (C) de la corde (46) entre le bord d'attaque (36) et le bord de fuite (38) et 0,9 fois la longueur (C) de ladite corde (46), de préférence comprise entre 0,25 fois la longueur (C) de ladite corde (46) et 0,9 fois la longueur (C) de ladite corde (46) ; et
le profil (40) présente, du côté de l'intrados (INT), un point d'inflexion (48) et le point d'inflexion (48) correspond sensiblement à la délimitation entre la partie épaisse (42) et la partie fine (44).

2. Pale (24) selon la revendication 1, dans laquelle l'épaisseur maximale (E1) de la partie épaisse (42) est inférieure ou égale à 0,25 fois la longueur (C) de la corde (46) entre le bord d'attaque (36) et le bord de fuite (38).

3. Pale (24) selon la revendication 1 ou 2, dans laquelle toute la pale (24) présente la partie épaisse (42) et la partie fine (44) quelle que soit la position selon la direction radiale (R) du plan de coupe (P).

4. Pale (24) selon la revendication 3, dans laquelle la pale (24) présente le même profil (40) quelle que soit la position selon la direction radiale (R) du plan de coupe (P).

5. Pale (24) selon l'une quelconque des revendications 1 à 3, dans laquelle la longueur (C) de la corde (46) entre le bord d'attaque (36) et le bord de fuite (38) est de valeur variable en fonction de la position selon la direction radiale (R) du plan de coupe (P), de préférence de valeur décroissante depuis l'anneau intérieur (20) vers l'anneau extérieur (22).

6. Pale (24) selon l'une quelconque des revendications précédentes, dans laquelle la partie épaisse (42) présente un plan de symétrie (S), le plan de symétrie (S) étant parallèle à la direction radiale (R).

7. Rotor (14) d'hydrolienne (10), le rotor (14) comprenant un anneau intérieur (20), un anneau extérieur (22) et au moins une pale (24) s'étendant selon une direction radiale (R) entre l'anneau intérieur (20) et l'anneau extérieur (22), **caractérisé en ce que** la pale (24) est conforme à l'une quelconque des revendications précédentes.

8. Hydrolienne (10) comprenant un stator (12) et un rotor (14), **caractérisée en ce que** le rotor (24) est conforme à la revendication 7.

9. Procédé de fabrication d'une pale (24) de rotor (14) d'hydrolienne, la pale (24) s'étendant selon une direction radiale (R) et comportant un extrados (EXT), un intrados (INT), un bord d'attaque (36) et un bord de fuite (38), le bord d'attaque (36) étant le bord de la pâle (24) s'étendant sensiblement selon la direction radiale (R) et disposé en amont suivant le sens de l'écoulement de l'eau le long de la pale (24), le bord de fuite (38) étant le bord de la pale (24) opposé au bord d'attaque (36) et disposé en aval suivant le sens de l'écoulement de l'eau le long de la pale (24),
le procédé de fabrication comprenant les étapes suivantes :
- le calcul (110, 130, 135, 140), pour chaque point du bord d'attaque (36), d'un profil de la pale (24), en section transversale selon un plan de coupe (P) passant par le point du bord d'attaque (36) et perpendiculaire à la direction radiale (R),
- la fabrication (150) de la pale (24) suivant les profils calculés, le procédé de fabrication étant **caractérisé en ce que** l'étape de calcul comporte :
- le choix (110) d'un premier point intermédiaire (105) le long d'une courbe d'extrados prédéterminée (102), le premier point intermédiaire (105) étant distinct de première (112) et seconde (114) extrémités de la courbe d'extrados (102),
- la détermination (130) d'une première portion (124) de courbe d'intrados, via une opération de symétrie, par rapport à une droite (A_{S}) passant par le premier point intermédiaire (105) et une première extrémité (112) de la courbe d'extrados, de la portion (126) de la courbe d'extrados comprise entre la première extrémité (112) et le premier point intermédiaire (105),
- la suppression (135) d'un tronçon de la première portion (124) de courbe d'intrados compris entre le premier point intermédiaire (105) et un deuxième point intermédiaire (141) agencé le long de la première portion (124) pour d'obtenir une première portion raccourcie (142), et
- la détermination (140) d'une deuxième portion (144) de courbe d'intrados en reliant le deuxième point intermédiaire (141) à la seconde extrémité (114) via une ligne géométrique, la première portion raccourcie (142) et la deuxième portion (144) formant une courbe d'intrados (148), et le profil étant formé de la courbe d'extrados (102) et de la courbe d'intrados (148).

10. Procédé de fabrication selon la revendication 9, dans lequel l'étape de détermination (140) de la deuxième portion (144) comporte une translation non uniforme de la portion (146) de la courbe d'extrados (102) comprise entre la seconde extrémité (114) et le premier point intermédiaire (105), la distance de translation étant variable d'un point à l'autre de la portion (146), de préférence croissante depuis le point à translater correspondant à la seconde extrémité (114) jusqu'au point à translater correspondant au premier point intermédiaire (105).

## Patentansprüche

1. Schaufelblatt (24) für einen Rotor (14) eines Strömungskraftwerks (10), wobei sich das Schaufelblatt (24) entlang einer Radialrichtung (R) erstreckt und eine Außenfläche (EXT) und eine Innenfläche (INT), eine Angriffskante (36) und eine Hinterkante (38) aufweist, wobei die Angriffskante (36) die Kante des Schaufelblatts (24) ist, die sich im Wesentlichen in Radialrichtung (R) erstreckt und stromaufwärts gemäß der Strömungsrichtung des Wassers entlang des Schaufelblatts (24) angeordnet ist, wobei die Hinterkante (38) die Kante des Schaufelblatts (24) ist, die der Angriffskante (36) entgegengesetzt ist und stromabwärts entsprechend der Strömungsrichtung des Wassers entlang des Schaufelblatts (24) angeordnet ist,
wobei wenigstens ein Abschnitt des Schaufelblatts (24) in einem Querschnitt gemäß einer Schnittebene (P) ein Profil (40) aufweisend einen dicken Abschnitt (42) und einen dünnen Abschnitt (44) hat, wobei die Schnittebene (P) rechtwinklig zu der Radialrichtung (R) ist, wobei der dicke Abschnitt (42) und der dünne Abschnitt (44) jeweils eine maximale Dicke (E1, E2) in einer Richtung rechtwinklig zur Außenfläche (EXT) aufweisen, wobei die maximale Dicke (E1) des dicken Abschnitts (42) mindestens vier Mal größer ist als die maximale Dicke (E2) des dünnen Abschnitts (44),
**dadurch gekennzeichnet, dass**:
die gekrümmte Länge (L2) des dünnen Abschnitts (44) zwischen dem 0,1-fachen der Länge (C) der Sehne (46) zwischen der Angriffskante (36) und der Hinterkante (38) und dem 0,9-fachen der Länge (C) dieser Sehne (46) beträgt, vorzugsweise zwischen dem 0,25-fachen der Länge (C) dieser Sehne (46) und dem 0,9-fachen der Länge (C) dieser Sehne (46) beträgt; und
das Profil (40) auf der Seite der Innenfläche (INT) einen Wendepunkt (48) hat und der Wendepunkt (48) im Wesentlichen der Grenze zwischen dem dicken Abschnitt (42) und dem dünnen Abschnitt (44) entspricht.

2. Schaufelblatt (24) nach Anspruch 1, wobei die maximale Dicke (E1) des dicken Abschnitts (42) kleiner oder gleich dem 0,25-fachen der Länge (C) der Sehne (46) zwischen der Angriffskante (36) und der Hinterkante (38) ist.

3. Schaufelblatt (24) nach Anspruch 1 oder 2, bei der das gesamte Schaufelblatt (24) den dicken Abschnitt (42) und den dünnen Abschnitt (44) hat, wie auch immer die Position entlang der Radialrichtung (R) der Schnittebene (P) ist.

4. Schaufelblatt (24) nach Anspruch 3, bei der das Schaufelblatt (24) dasselbe Profil (40) hat, wie auch immer die Position entlang der Radialrichtung (R) der Schnittebene (P) ist.

5. Schaufelblatt (24) nach einem der Ansprüche 1 bis 3, wobei die Länge (C) der Sehne (46) zwischen der Angriffskante (36) und der Hinterkante (38) einen variablen Betrag als Funktion der Position der Schnittebene (P) entlang der Radialrichtung (R) hat, vorzugsweise einen abnehmenden Betrag vom Innenring (20) zum Außenring (22).

6. Schaufelblatt (24) nach einem der vorhergehenden Ansprüche, bei der der dicke Abschnitt (42) eine Symmetrieebene (S) hat, wobei die Symmetrieebene (S) parallel zur Radialrichtung (R) ist.

7. Rotor (14) eines Strömungskraftwerks (10), wobei der Rotor einen Innenring (20), einen Außenring (22) und wenigstens ein Schaufelblatt (24) aufweist, das sich entlang einer Radialrichtung (R) zwischen dem Innenring (20) und dem Außenring (22) erstreckt, **dadurch gekennzeichnet, dass** das Schaufelblatt (24) einem der vorhergehenden Ansprüche entspricht.

8. Strömungskraftwerk (10) aufweisend einen Stator (12) und einen Rotor (14), **dadurch gekennzeichnet, dass** der Rotor (24) dem Anspruch 7 entspricht.

9. Verfahren zur Herstellung eines Schaufelblatts (24) eines Rotors (14) eines Strömungskraftwerks, wobei das Schaufelblatt (24) sich entlang einer Radialrichtung (R) erstreckt und eine Außenfläche (EXT), eine Innenfläche (INT), eine Angriffskante (36) und eine Hinterkante (38) aufweist, wobei die Angriffskante (36) die Kante des Schaufelblatts (24) ist, die sich im Wesentlichen in Radialrichtung (R) erstreckt und stromaufwärts in Strömungsrichtung des Wassers entlang des Schaufelblatts (24) angeordnet ist, wobei die Hinterkante (38) die Kante der Schaufel (24) ist, die der Angriffskante (36) entgegengesetzt ist und stromabwärts in Strömungsrichtung des Wassers entlang des Schaufelblatts (24) angeordnet ist,
wobei das Herstellungsverfahren die folgenden Schritte aufweist:
- für jeden Punkt der Angriffskante (36) das Berechnen (110, 130, 135, 140) eines Profils des Schaufelblatts (24) in einem Querschnitt in einer Schnittebene (P), die sich durch den Punkt der Angriffskante (36) erstreckt und rechtwinklig zu der Radialrichtung (R) ist,
- Herstellung (150) des Schaufelblatts (24) gemäß der berechneten Profile, wobei das Herstellungsverfahren **dadurch gekennzeichnet ist, dass** der Schritt des Berechnens aufweist:
- das Auswählen (110) eines ersten Zwischenpunktes (105) entlang einer vorgegebenen Kurve der Außenfläche (102), wobei der erste Zwischenpunkt (105) von dem ersten (112) und dem zweiten (114) Ende der Kurve der Außenfläche (102) entfernt ist,
- das Bestimmen (130) eines ersten Abschnitts (124) der Kurve der Innenfläche mittels einer Symmetrieoperation auf den Abschnitt (126) der Kurve der Außenfläche, der zwischen dem ersten Ende (112) und dem ersten Zwischenpunkt (105) enthalten ist, in Bezug auf eine Gerade (A_{S}), die sich durch den ersten Zwischenpunkt (105) und durch das erste Ende (112) der Kurve der Außenfläche erstreckt,
- das Unterdrücken (135) eines Streckenabschnitts des ersten Abschnitts (124) der Kurve der Innenfläche, der zwischen dem ersten Zwischenpunkt (105) und einem zweiten Zwischenpunkt (141) enthalten ist, der die Länge des ersten Abschnitts (124) angibt, um einen verkürzten ersten Abschnitt (142) zu erhalten und
- Bestimmen (140) eines zweiten Abschnitts (144) der Kurve der Innenfläche durch das Verbinden des zweiten Zwischenpunkts (141) mit dem zweiten Ende (114) mittels einer geometrischen Linie, wobei der verkürzte erste Abschnitt (142) und der zweite Abschnitt (144) eine Kurve der Innenfläche (148) bilden und das Profil durch die Kurve der Außenfläche (102) und die Kurve der Innenfläche (148) gebildet ist.

10. Verfahren zur Herstellung nach Anspruch 9, bei dem der Schritt des Bestimmens (140) des zweiten Abschnitts (144) eine nicht gleichförmige Translation des Abschnitts (146) der Kurve der Außenfläche (102) aufweist, der zwischen dem zweiten Ende (114) und dem ersten Zwischenpunkt (105) enthalten ist, wobei der Abstand der Translation von einem Punkt zum anderen des Abschnitts (146) verschieden ist, vorzugsweise von dem dem zweiten Ende (114) entsprechenden Translationspunkt bis zu dem dem ersten Zwischenpunkt (105) entsprechenden Translationspunkt zunimmt.

## Claims

1. A blade (24) for a marine turbine (10) rotor (14), the blade (24) extending in a radial direction (R) and having a convex side (EXT), a concave side (INT), a leading edge (36) and a trailing edge (38), the leading edge (36) being the edge of the blade (24) extending substantially in the radial direction (R) positioned upstream in the direction of the flow of water along the blade (24), the trailing edge (38) being the edge of the blade (24) opposite the leading edge (36) and positioned downstream in the direction of the flow of water along the blade (24),
at least one portion of the blade (24) having, in transverse section in a cutting plane (P), a profile (40) having a thick portion (42) and a thin portion (44), the cutting plane (P) being perpendicular to the radial direction (R), the thick portion (42) and the thin portion (44) each having a maximum thickness (E1, E2) in a direction perpendicular to the convex side (EXT), the maximum thickness (E1) of the thick portion (42) being at least four times greater than the maximum thickness (E2) of the thin portion,
**characterized in that**:
the curved length (L2) of the thin portion (44) is comprised between 0.1 times the length (C) of the chord (46) between the leading edge (36) and the trailing edge (38) and 0.9 times the length (C) of said chord (46), preferably comprised between 0.25 times the length (C) of said chord (46) and 0.9 times the length (C) of said chord (46); and
the profile (40) has, on the concave side (INT), an inflection point (48) and the inflection point (48) substantially corresponds to the delimitation between the thick portion (42) and the thin portion (44).

2. The blade (24) according to claim 1, wherein the maximum thickness (E1) of the thick portion (42) is less than or equal to 0.25 times the length (C) of the chord (46) between the leading edge (36) and the trailing edge (38).

3. The blade (24) according to claim 1 or 2, wherein the entire blade (24) has the thick portion (42) and the thin portion (44) irrespective of the position in the radial direction (R) of the cutting plane (P).

4. The blade (24) according to claim 3, wherein the blade (24) has the same profile (40) irrespective of the position in the radial direction (R) of the cutting plane (P).

5. The blade (24) according to any one of claims 1 to 3, wherein the value of the length (C) of the chord (46) between the leading edge (36) and the trailing edge (38) varies based on the position in the radial direction (R) of the cutting plane (P), preferably with a decreasing value from the inner ring (20) toward the outer ring (22).

6. The blade (24) according to any one of the preceding claims, wherein the thick portion (42) has a plane of symmetry (S), the plane of symmetry (S) being parallel to the radial direction (R).

7. A marine turbine (10) rotor (14), the rotor (14) comprising an inner ring (20), an outer ring (22) and at least one blade (24) extending in a radial direction (R) between the inner ring (20) and the outer ring (22), **characterized in that** the blade (24) is according to any one of the preceding claims.

8. A marine turbine (10) comprising a stator (12) and a rotor (14), **characterized in that** the rotor (24) is according to claim 7.

9. A method for manufacturing a marine turbine rotor (14) blade (24), the blade (24) extending in a radial direction (R) and having a convex side (EXT), a concave side (INT), a leading edge (36) and a trailing edge (38), the leading edge (36) being the edge of the blade (24) extending substantially in the radial direction (R) positioned upstream in the direction of the flow of water along the blade (24), the trailing edge (38) being the edge of the blade (24) opposite the leading edge (36) and positioned downstream in the direction of the flow of water along the blade (24),
the manufacturing method comprising the following steps:
- calculating (110, 130, 135, 140), for each point of the leading edge (36), a profile of the blade (24), in transverse section along a cutting plane (P) passing through the leading edge (36) and perpendicular to the radial direction (R),
- manufacturing (150) the blade (24) according to the calculated profiles,
the manufacturing method being **characterized in that** the calculation step includes:
- choosing (110) a first intermediate point (105) along a predetermined convex curve (102), the first intermediate point (105) being separate from the first (112) and second (114) ends of the convex curve (102),
- determining (130) a first concave curve portion (124), via a symmetry operation, relative to a straight line (As) passing through the first intermediate point (105) and a first end (112) of the convex curve, of the portion (126) of the convex curve comprised between the first end (112) and the first intermediate point (105),
- eliminating (135) a segment of the first concave curve portion (124) comprised between the first intermediate point (105) and a second intermediate point (141) arranged along the first portion (124) to obtain a first shortened portion (142), and
- determining (140) a second concave curve portion (144) connecting the second intermediate point (141) to the second end (114) via a geometric line,
the first shortened portion (142) and the second portion (144) forming a concave curve (148), and the profile being formed by the convex curve (102) and concave curve (148).

10. The manufacturing method according to claim 9, wherein the step (140) for determining the second portion (144) comprises a non-uniform translation of the portion (146) of the convex curve (102) comprised between the second end (114) and the first intermediate portion (105), the translation distance varying from one point of the portion (146) to the other, preferably increasing from the point to be translated corresponding to the second end (114) to the point to be translated corresponding to the first intermediate point (105).
